# EUROPÄISCHE PATENTSCHRIFT

(11) **EP 3 755 556 B1**
(45) Veröffentlichungstag und Bekanntmachung des Hinweises auf die Patenterteilung: **22.06.2022**
(21) Anmeldenummer: 19708254.8
(22) Anmeldetag: 21.02.2019
(51) Int. Cl.: B60H 3/06, B60H 1/00, B01D 46/00, B60H 1/24, B60H 1/26

(54) **BEFESTIGUNGSMODUL UND FILTERSYSTEM**
FASTENING MODULE AND FILTER SYSTEM
MODULE DE FIXATION ET SYSTÈME DE FILTRE

(30) Priorität: 21.02.2018 DE 102018001384
(43) Veröffentlichungstag der Anmeldung: 30.12.2020
(73) Patentinhaber: MANN+HUMMEL GmbH, 71636 Ludwigsburg (DE)
(72) Erfinder: RAUSCHMAIER, Jürgen, 74632 Neuenstein (DE); PIETROWSKI, Herbert, 74385 Pleidelsheim (DE); JOOS, Bernd, 73547 Lorch (DE); KRAUTNER, Christoph, 84163 Marklkofen (DE); EBNET, Daniel, 84163 Marklkofen (DE)
(74) Vertreter: Mann + Hummel Intellectual Property
(86) Internationale Anmeldenummer: PCT/EP2019/054371
(87) Internationale Veröffentlichungsnummer: WO 2019/162409

(56) Entgegenhaltungen:
- DE-U1- 8 625 245
- US-A- 5 302 153
- US-A1- 2010 240 293

## Beschreibung

### Technisches Gebiet

Die Erfindung betrifft ein Befestigungsmodul zum Anschluss eines Filtersystems an eine gewölbte Anschlussfläche mit Öffnungen zum Durchtritt eines Fluids, insbesondere eines Innenraumluftfiltersystems eines Kraftfahrzeugs sowie ein Filtersystem mit einem Befestigungsmodul.

### Stand der Technik

Aus der EP 608 034 B1 ist eine Filteranordnung bekannt, insbesondere für ein Kraftfahrzeug, mit einem Basisteil mit Mitteln zum Befestigen am Fahrzeug und zum Begrenzen mindestens einer Aufnahmekammer. Die Filteranordnung weist mindestens ein auswechselbares Filterteil auf, das in der Aufnahmekammer angeordnet ist. Das Filterteil ist formbeständig und die Aufnahmekammer von der Anströmseite des Basisteiles her zugänglich. In der US 5302153 wird ein Befestigungsmodul zum Anschluss eines Luftfilters offenbart.

### Offenbarung der Erfindung

Eine Aufgabe der Erfindung ist es, ein Befestigungsmodul zu schaffen, mittels dessen ein Filtersystem auf einfache und zuverlässige Weise an Öffnungen in einer gewölbten Anschlussfläche dicht angeschlossen werden kann.

Eine weitere Aufgabe der Erfindung ist es, ein Filtersystem zu schaffen, das mit einem solchen Befestigungsmodul auf einfache und zuverlässige Weise an Öffnungen in einer gewölbten Anschlussfläche dicht angeschlossen werden kann.

Eine weitere Aufgabe der Erfindung ist es, ein Filtermodul für ein solches Filtersystem zu schaffen, das mit einem solchen Befestigungsmodul auf einfache und zuverlässige Weise an Öffnungen in einer gewölbten Anschlussfläche dicht angeschlossen werden kann.

Die vorgenannte Aufgabe wird nach einem Aspekt der Erfindung gelöst von einem Befestigungsmodul zum Anschluss eines Filtersystems an eine gewölbte Anschlussfläche mit Öffnungen zum Durchtritt eines Fluids, umfassend wenigstens ein Anschlussgehäuse, welches bestimmungsgemäß mit dem Filtersystem fluidisch verbindbar ist, und mit den Öffnungen korrespondierende, in starren Einzelkanalstücken verlaufende Kanäle im Anschlussgehäuse, die mit Anschlussflanschen mit den Öffnungen in der Anschlussfläche verbindbar sind, wobei die starren Einzelkanalstücke über Verbindungsbereiche miteinander und/oder mit dem Anschlussgehäuse verbunden sind.

Nach einem weiteren Aspekt der Erfindung wird die weitere Aufgabe gelöst von einem Filtersystem mit einem derartigen Befestigungsmodul, umfassend ein Filtergehäuse, wenigstens ein Filterelement, welches in dem Filtergehäuse angeordnet ist, und welches eine Rohseite von einer Reinseite trennt, einen Eintrittsbereich und einen Austrittsbereich für zu filterndes Fluid, wobei das Befestigungsmodul mit dem Eintrittsbereich oder dem Austrittsbereich fluidisch verbunden ist.

Nach einem weiteren Aspekt der Erfindung wird die weitere Aufgabe gelöst von einem Filtermodul, umfassend ein Filterelement in einem Gehäuseteil, wobei das Filtermodul im Wesentlichen über seinen Querschnitt frei ansaugend eine saugrohrartige Aufteilung eines Volumenstroms ermöglicht.

Günstige Ausgestaltungen und Vorteile der Erfindung ergeben sich aus den weiteren Ansprüchen, der Beschreibung und der Zeichnung.

Es wird ein Befestigungsmodul zum Anschluss eines Filtersystems an eine gewölbte Anschlussfläche mit Öffnungen zum Durchtritt eines Fluids vorgeschlagen, umfassend wenigstens ein Anschlussgehäuse, welches bestimmungsgemäß mit dem Filtersystem fluidisch verbunden ist, und mit den Öffnungen korrespondierende, in starren Einzelkanalstücken verlaufende Kanäle im Anschlussgehäuse, die mit Anschlussflanschen mit den Öffnungen in der Anschlussfläche verbindbar sind. Die starren Einzelkanalstücke sind über flexible Verbindungsbereiche miteinander und/oder mit dem Anschlussgehäuse verbunden.

Bei dem erfindungsgemäßen Bauteil handelt es sich um ein Befestigungsmodul für ein Filtersystem zum Anschluss an eine gewölbte Anschlussfläche, insbesondere für ein Innenraumluftfiltersystem im Fahrzeug. Dabei ist ganz besonders ein feinstabscheidendes Filtersystem im Fokus, beispielsweise ein Schwebstofffiltersystem, insbesondere ein EPA-Filtersystem (EPA = Efficient Particulate Air filter) oder HEPA Filtersystem (HEPA = High Efficiency Particulate Air filter). Das Filtersystem dient vorzugsweise zur Reinigung der in den Fahrzeuginnenraum eingeblasenen Luft. Das Befestigungsmodul kann vorteilhaft zum Anschluss der Reinseite des Filtersystems an den Fahrzeuginnenraum dienen.

HEPA-Filter sind vorzugsweise Tiefenfilter und scheiden Schwebstoffe aus der Luft ab. In der Norm EN 1822-3 aus dem Jahr 2009 werden Filterklassen E10-E12 (EPA) und H13-H14 (HEPA) sowie U15-U17 (ULPA, Ultra Low Particulate Air filter) unterschieden. Für Partikeln mit 0,1 µm-0,3 µm Durchmesser weist ein EPA-Filter der Klasse E10 einen Gesamtabscheidegrad von mehr als 85 %, ein EPA-Filter der Klasse E11 einen Gesamtabscheidegrad von mehr als 95 %. Ein HEPA-Filter der Klasse H13 weist einen Gesamtabscheidegrad von mehr als 99,95 % für diese Partikel auf. Vorzugsweise kommt ein Filterelement zum Einsatz, das wenigsten die Filterklasse E11 nach EN 1822-3 aus dem Jahr 2009 aufweist.

Das Befestigungsmodul ist separat hergestellt und gegenüber dem Filtergehäuse radial abgedichtet. Das Befestigungsmodul weist Fluidführungskanäle auf und ist zwischen einer, vorzugsweise in alle Raumrichtungen, gewölbten Anschlussfläche und einem Filtergehäuse angeordnet. Die gewölbte Anschlussfläche ist beispielsweise eine Blechoberfläche. Das Befestigungsmodul umfasst zur besseren Anpassung und Abdichtung an die gewölbte Anschlussfläche flexibel miteinander verbundene starre Einzelkanalstücke und ist vorzugsweise gegen die gewölbte Anschlussfläche mit einer Axialdichtung abgedichtet. Das Befestigungsmodul kann dabei in Ausführungsformen drei und mehr Einzelkanalstücke aufweisen. Gegenüber dem Luftfiltergehäuse ist das Modul vorzugsweise mittels Radialdichtringen abgedichtet. Die Auslenkung der gewölbten Anschlussfläche beträgt beispielsweise 0,1 % bis 15 % der Länge und/oder Breite des Bauteils, vorzugsweise 0,5 % bis 10 % der Länge und/oder Breite des Bauteils.

Die besondere Herausforderung dabei ist, dass zur Verbindung mit der gewölbten Anschlussfläche im Fahrzeug mehrere nebeneinander liegende reinluftseitige Öffnungen in der Anschlussfläche vorhanden sind, die axial auf der gewölbten Fläche abgedichtet werden müssen. Bei der gewölbten Anschlussfläche kann es sich beispielsweise um ein Tiefziehblech als Teil der Fahrzeugkarosserie handeln, beispielsweise einen Blechträger unterhalb der Windschutzscheibe eines Fahrzeugs.

Um die Toleranzen zwischen der gewölbten Anschlussfläche und Flanschen des Befestigungsmoduls zueinander besser kompensieren zu können, ist es günstig, wenn die einzelnen Dichtflächen der Anschlussflansche der Fluidkanäle des Befestigungsmoduls zur Anschlussfläche hin beweglich sind. Aus diesem Grund werden die Verbindungsbereiche zwischen den einzelnen Anschlussflanschen der Kanäle, die miteinander über das Anschlussgehäuse verbunden sind, geometrisch so gestaltet, dass sie flexibel biegbar und/oder tordierbar sind.

Herkömmliche Anschlussflansche von Filtersystemen sind starr und weisen in der Regel ebene Dichtflächen auf. Mit dem erfindungsgemäßen Befestigungsmodul für ein Filtersystem können die erforderlichen Toleranzen leichter eingehalten werden, da jeder einzelne Anschlussflansch für sich alleine bei der Montage in alle Raumrichtungen biegbar und/oder tordierbar an die gewölbte Anschlussfläche angepasst werden kann und nach der Verbindung mit der gewölbten Anschlussfläche in dieser Form verbleibt.

Ein wesentlicher Vorteil des erfindungsgemäßen Befestigungsmoduls für ein Filtersystem ist demzufolge die Einhaltung der erforderlichen Fertigungstoleranzen. Das Zusammenwirken der einzelnen Anschlussflansche der verschiedenen Kanäle untereinander und mit dem Anschlussgehäuse und in Verbindung mit der nicht ebenen Anschlussfläche des Fahrzeugs, würden bei einem herkömmlichen Flanschkonzept extrem hohe Anforderungen an die Formgenauigkeit der Anschlussflansche stellen. Dadurch, dass sich die einzelnen Anschlussflansche unabhängig voneinander an die gewölbte Anschlussfläche des Fahrzeugs anpassen können, werden die Anforderungen beispielsweise an den Verzug der Anschlussflansche, bzw. des Anschlussgehäuses, erheblich reduziert.

Die Flexibilität des Anschlussgehäuses des Befestigungsmoduls ist vorhanden, bevor das Befestigungsmodul vollständig im Fahrzeug montiert ist. Die Flexibilität dient dazu, einen korrekten Montagevorgang zu erleichtern bzw. zu ermöglichen. Nachdem das Befestigungsmodul vollständig montiert ist, besteht eine stabile Verbindung mit der gewölbten Anschlussfläche so, dass das Anschlussgehäuse nicht mehr flexibel, sondern insgesamt starr ist, so dass entsprechende Betriebskräfte aufgenommen werden können.

Ein weiterer Vorteil der erfindungsgemäßen Lösung ist, dass die Flexibilität des Befestigungsmoduls an einer oder an mehreren, unabhängig voneinander liegenden Stellen vorliegen kann.

Außerdem kann die Flexibilität des Befestigungsmoduls in nur eine Biegerichtung und/oder in mehrere, bzw. verschiedene Biegerichtungen erfolgen. Dies kann jeweils an einer Stelle des Befestigungsmoduls oder verteilt auf mehrere Stellen geschehen.

Vorteilhaft kann das erfindungsgemäße Befestigungsmodul so definierte Biegezonen, nämlich im Wesentlichen an den Verbindungsstellen zwischen den Kanälen und dem Anschlussgehäuse des Befestigungsmoduls aufweisen. Die Biegezonen sind biegbar und/oder tordierbar, da das Anschlussgehäuse an den Stellen keine Versteifungselemente oder Verrippungen aufweist. Die Biegezonen können beispielswese durch gezielte Wandstärkenreduzierung des Anschlussgehäuses an den gewünschten Stellen erreicht werden.

Das Befestigungsmodul kann vorteilhaft aus Kunststoff sein und in einem Spritzgussprozess hergestellt werden.

Vorteilhaft kann die Biegerichtung in einer Ebene durch die Verbindungslinie der Anschlussflansche liegen. Eine solche Biegerichtung bietet im Wesentlichen Flexibilität in der Verbindungsachse der Anschlussflansche, was von Vorteil sein kann, wenn das Filtersystem über die gesamte Breite des Fahrzeugs sich ausdehnt und entsprechend über eine große Breite angeschlossen werden muss, da die Kanäle über die gesamte Breite verteilt sind.

Gemäß einer vorteilhaften Ausgestaltung des Befestigungsmoduls kann eine axiale Abdichtung gegenüber der Anschlussfläche vorgesehen sein und/oder eine radiale Abdichtung zum Filtergehäuse vorgesehen sein. Die Abdichtung kann vorzugsweise mittels einer oder mehreren Lippen-Dichtungen erfolgen. Bei einer Lippen-Dichtung erfolgt die Dichtwirkung kraftlos oder zumindest kraftarm durch Verformung der Dichtlippe und nicht durch Kompression der Dichtung.

Optional kann die Abdichtung mittels einer oder mehreren Rundschnurringdichtungen erfolgen.

Gemäß einer vorteilhaften Ausgestaltung des Befestigungsmoduls können die Verbindungsbereiche in schräg zueinander liegenden Richtungen, insbesondere in zwei zueinander senkrecht stehenden Richtungen biegbar und/oder tordierbar ausgebildet sein. Bei einer stark in mehrere, schräg zueinander liegenden Richtungen gekrümmten Anschlussfläche, bei der also eine großflächig dreidimensionale Krümmung vorliegt, kann das erfindungsgemäße Befestigungsmodul vorteilhaft eingesetzt werden. Günstigerweise kann eine dreidimensionale Flexibilität der Anschlussflansche der Kanäle durch eine entsprechende Gestaltung der Verbindungsbereiche zwischen den Kanälen und dem Anschlussgehäuse erreicht werden.

Gemäß einer vorteilhaften Ausgestaltung des Befestigungsmoduls kann ein Anschlussflansch eine umlaufende Dichtung aufweisen. Jeder Anschlussflansch kann zweckmäßigerweise ein umlaufende Elastomer-Dichtung aufweisen und auf diese Weise individuell an die korrespondierende Öffnung in der gewölbten Anschlussfläche angeschlossen und abgedichtet werden. Dadurch kann eine sehr zuverlässige Abdichtung der Kanäle zu der Anschlussfläche erreicht werden, die auch unter größeren Betriebslasten dauerhaft abdichten kann.

Gemäß einer vorteilhaften Ausgestaltung des Befestigungsmoduls kann die Dichtung als axiale Lippendichtung ausgebildet sein. Eine solche Dichtung hat sich nach dem Stand der Technik als zuverlässig und dauerhaft bei herkömmlichen starren Anschlussflanschen erwiesen. Vorteilhaft kann diese Art der Dichtung auch für das erfindungsgemäße Befestigungsmodul eingesetzt werden.

Gemäß einer vorteilhaften Ausgestaltung des Befestigungsmoduls können mehrere Anschlussflansche eine gemeinsame, umlaufende Dichtung aufweisen. Günstigerweise können auch mehrere Anschlussflansche zu einzelnen Gruppen zusammengefasst von einer gemeinsamen umlaufenden Dichtung umgeben sein. Dadurch lässt sich die Abdichtung kostengünstig gestalten und eine günstige Abdichtung lässt sich dennoch auch bei einem flexiblen Befestigungsmodul erreichen. Zweckmäßigerweise werden dabei Anschlussflansche zusammengefasst, welche auf einem Flächenteil liegen, der eine ähnliche Krümmung aufweist.

Gemäß einer vorteilhaften Ausgestaltung des Befestigungsmoduls kann das Anschlussgehäuse auf einer Reinseite des Filtersystems angeordnet sein. Üblicherweise stellt der Anschluss der Reinseite des Filtersystems an den Fahrzeuginnenraum den kritischen Teil der Luftführung dar. Insofern kann das erfindungsgemäße Befestigungsmodul zweckmäßig zum Anschluss der Luftführung der gefilterten Luft an den Fahrzeuginnenraum eingesetzt werden.

Gemäß einer vorteilhaften Ausgestaltung des Befestigungsmoduls können die Verbindungsbereiche als Scharnier ausgestaltet sein. Alternativ können die flexiblen Verbindungsbereiche der Kanäle statt durch Wandstärkenreduzierung auch durch Scharniere, beispielsweise in Form von Filmscharnieren erreicht werden. Dadurch lassen sich die einzelnen Anschlussflansche der Kanäle des Befestigungsmoduls günstig an eine gewölbte Anschlussfläche des Fahrzeugs anpassen und dicht anschließen.

Gemäß einer vorteilhaften Ausgestaltung des Befestigungsmoduls können das Anschlussgehäuse und/oder Kanäle und/oder Verbindungsbereiche aus Kunststoff, insbesondere als Spritzgussteil ausgebildet sein. Kunststoffe stellen kostengünstig einzusetzende Werkstoffe für Luftfiltersysteme dar. Auch lassen sie sich durch Spritzgussprozesse sehr flexibel in der Formgestaltung herstellen. Als Kunststoffe können verschiedene Werkstoffe wie beispielsweise Polyamid (PA), Polypropylen (PP), in nicht-versteifter oder auch in glasfaserversteifter Form zum Einsatz kommen.

Nach einem weiteren Aspekt betrifft die Erfindung ein Filtersystem mit einem Befestigungsmodul zum Anschluss an eine gewölbte Anschlussfläche.

Das Filtersystem umfasst ein Filtergehäuse, wenigstens ein Filterelement, welches in dem Filtergehäuse angeordnet ist, und welches eine Rohseite von einer Reinseite trennt, und einen Eintrittsbereich für zu filterndes Fluid und einen Austrittsbereich für gefiltertes Fluid. Dabei ist das Befestigungsmodul mit dem Eintrittsbereich oder dem Austrittsbereich fluidisch verbunden.

Das Befestigungsmodul umfasst wenigstens ein Anschlussgehäuse, welches bestimmungsgemäß mit dem Filtersystem fluidisch verbunden ist, und ein oder mehrere, mit den Öffnungen korrespondierende Kanäle im Anschlussgehäuse, die mit Anschlussflanschen mit den Öffnungen in der Anschlussfläche verbindbar sind. Die ein oder mehreren Kanäle sind über flexible Verbindungsbereiche miteinander und/oder mit dem Anschlussgehäuse verbunden. Dabei sind die Verbindungsbereiche zu dem einen oder zu den mehreren Kanälen in wenigstens einer Biegerichtung flexibel biegbar und/oder tordierbar ausgebildet.

Bei dem erfindungsgemäßen Filtersystem handelt es sich um ein Filtersystem zum Anschluss an eine gewölbte Anschlussfläche, insbesondere für ein Innenraumluftfiltersystem im Fahrzeug. Dabei ist ganz besonders ein feinstabscheidendes Filtersystem im Fokus, beispielsweise ein Schwebstofffiltersystem der Art eines EPA-Filtersystems oder HEPA Filtersystems. Das Filtersystem dient vorzugsweise zur Reinigung der in den Fahrzeuginnenraum eingeleiteten Luft. Das Befestigungsmodul kann vorteilhaft zum Anschluss der Reinseite des Filtersystems an den Fahrzeuginnenraum dienen.

Ein wesentlicher Vorteil des erfindungsgemäßen Befestigungsmoduls für ein Filtersystem ist die Einhaltung der erforderlichen Fertigungstoleranzen. Das Zusammenwirken der einzelnen Anschlussflansche der verschiedenen Kanäle des Befestigungsmoduls untereinander und mit dem Anschlussgehäuse und in Verbindung mit der nicht ebenen Anschlussfläche des Fahrzeugs, würden bei einem herkömmlichen Flanschkonzept extrem hohe Anforderungen an die Formgenauigkeit der Anschlussflansche stellen. Dadurch, dass sich die einzelnen Anschlussflansche unabhängig voneinander an die gewölbte Anschlussfläche des Fahrzeugs anpassen können, werden die Toleranzanforderungen beispielsweise an den Verzug der Anschlussflansche, bzw. des Anschlussgehäuses erheblich reduziert.

Gemäß einer vorteilhaften Ausgestaltung kann das Befestigungsmodul auf einer Reinseite des Filtersystems angeordnet sein.

Gemäß einer weiteren vorteilhaften Ausgestaltung kann eine axiale Abdichtung gegenüber der Anschlussfläche und/oder eine radiale Abdichtung zum Filtergehäuse vorgesehen sein.

Gemäß einer weiteren vorteilhaften Ausgestaltung des Filtersystems kann wenigstens ein Filtermodul mit wenigstens einem Gehäuseteil des Filtergehäuses mit wenigstens einem Filterelement in dem Gehäuseteil vorgesehen sein, wobei das Filtermodul über seinen Querschnitt im Wesentlichen frei ansaugend eine saugrohrartige Aufteilung eines Volumenstroms ermöglicht. Vorteilhaft kann die im Wesentlichen freie Ansaugung über den Querschnitt des Filterelements erfolgen, während an seiner Abströmseite die saugrohrartige Aufteilung eines Volumenstroms ermöglicht ist, indem das Gehäuseteil an der Abströmseite des Filterelements wenigstens zwei Austrittskanäle aufweist, die mit in Einzelkanalstücken des Befestigungsmoduls verlaufenden Kanälen fluidisch verbunden sind.

Vorteilhaft kann die Fluidführung abströmseitig an eine Fluidführung des Befestigungsmoduls angepasst sein. Insbesondere können die Austrittskanäle des Gehäuseteils in ihrer Anordnung an die Einzelkanalstücke angepasst sein.

Vorteilhaft kann das erste Filterelement mit dem ersten Gehäuseteil als Filtermodul ausgebildet sein, bei dem das Filterelement im Gehäuseteil fest montiert ist, beispielsweise eingeklebt. Günstigerweise kann das Filtermodul auswechselbar ausgebildet sein.

Gemäß einer weiteren vorteilhaften Ausgestaltung des Filtersystems kann das erste Filterelement einem zweiten Filterelement strömungsmäßig nachgeordnet sein, wobei die beiden Filterelemente jeweils in separaten Gehäuseteilen des Filtergehäuses angeordnet sein können. Das erste Filterelement kann ein Partikelfilter sein, insbesondere ein Schwebstofffilterelement, während das zweite Filterelement als Vorfilter beispielsweise zur Absorption von Gasen ausgebildet sein kann. Vorteilhaft kann das zweite Filterelement eine große Querschnittsfläche für die Fluidansaugung aufweisen. Vorzugsweise ist die Querschnittsfläche auf den anströmseitigen Querschnitt des ersten Filterelements abgestimmt.

Günstigerweise können die Filterelemente mit ihren Gehäuseteilen ein Filtermodul bilden, das wenigstens teilweise auswechselbar ausgebildet sein kann. Vorteilhaft kann das erste Filterelement ein Lebensdauerbauteil sein, das nicht oder nur selten gewechselt werden muss, während das zweite Filterelement in Abständen regelmäßig ausgewechselt werden kann. Hierzu ist günstig, wenn das zweite Filterelement gewechselt werden kann, ohne das zweite Gehäuseteil auszuwechseln. Optional kann auch das gesamte Filtermodul auswechselbar sein.

Gemäß einer weiteren vorteilhaften Ausgestaltung des Filtersystems kann das erste Gehäuseteil auf das zweite Gehäuseteil aufgesetzt sein. Dies ermöglicht eine einfache Montage sowie eine stabile Verbindung der Gehäuseteile. Vorteilhaft kann eine scharnierartige Verbindung zwischen den Gehäuseteilen vorgesehen sein, die eine axiale Verpressung des zweiten Filterelements ermöglicht. Hiermit kann eine zuverlässige Abdichtung des Vorfilters erreicht werden.

Gemäß einer weiteren vorteilhaften Ausgestaltung des Filtersystems können das erste Gehäuseteil und das zweite Gehäuseteil lösbar miteinander verbunden sein. Dies erleichtert den Austausch von Filterelementen, insbesondere des zweiten Filterelements.

Nach einem weiteren Aspekt der Erfindung wird ein Filtermodul für ein Filtersystem vorgeschlagen, wobei das Filtermodul wenigstens ein Gehäuseteil mit einem Filterelement in dem Gehäuseteil aufweist, wobei das Filtermodul im Wesentlichen über seinen Querschnitt frei ansaugend eine saugrohrartige Aufteilung von einem durch das Filterelement hindurchtretenden Volumenstrom ermöglicht.

Vorteilhaft steht ein großer Ansaugquerschnitt zur Verfügung, während abströmseitig das Fluid in verschiedene Teilströme aufgeteilt werden kann. Das Filterelement kann eine einfache Geometrie aufweisen. Die saugrohrartige Aufteilung des Volumenstroms kann vorteilhaft durch Austrittskanäle im Gehäuseteil bewirkt werden. Die Austrittskanäle können entsprechend vorgegebener Anschlussgeometrien ausgestaltet und angeordnet sein.

Nach einer günstigen Ausgestaltung des Filtermoduls kann das Filtermodul über seinen Querschnitt im Wesentlichen frei ansaugend ausgebildet sein und zur saugrohrartigen Aufteilung von einem durch das Filterelement hindurchströmenden Volumenstrom wenigstens zwei Austrittskanäle in seinem Gehäuseteil aufweisen. Günstigerweise kann zur Ansaugung der gesamte anströmseitige Querschnitt des Filterelements genutzt werden. Das Filterelement kann in einfacher geometrischer Form quaderförmig ausgebildet sein. Zweckmäßigerweise weist das Filterelement einen Filterbalg auf, dessen Außenkanten mit einem umlaufenden Band abgedichtet sind.

Vorteilhaft können die wenigstens zwei Austrittskanäle bestimmungsgemäß mit in korrespondierenden Einzelkanalstücken des Befestigungsmoduls verlaufenden Kanälen fluidisch verbindbar sein.

Nach einer günstigen Ausgestaltung des Filtermoduls kann das Gehäuseteil wannenartig ausgebildet sein, so dass abströmseitig des darin angeordneten Filterelements ein reinseitiger Luftsammelraum ausgebildet sein kann. Vorteilhaft kann das Filterelement im ersten Gehäuseteil das Gehäuseteil zur Anströmseite abschließen. Die wannenartige Struktur des Gehäuseteils erlaubt eine großflächige Ansaugung von Fluid durch das Filterelement.

Nach einer günstigen Ausgestaltung des Filtermoduls kann das Gehäuseteil abströmseitig wenigstens zwei Austrittskanäle aufweisen, die fluidisch an den Luftsammelraum angeschlossen sein können. Vorteilhaft kann eine Anordnung der Austrittskanäle an einen reinseitigen Anschlussbereich des Filtermoduls angepasst sein. Das Filterelement kann eine einfache Geometrie aufweisen.

Nach einer günstigen Ausgestaltung des Filtermoduls kann das Gehäuseteil abströmseitig wenigstens drei Austrittskanäle aufweisen, die fluidisch an den Luftsammelraum angeschlossen sein können. Vorteilhaft kann eine Anordnung der Austrittskanäle an einen reinseitigen Anschlussbereich des Filtermoduls angepasst sein. Das Filterelement kann eine einfache Geometrie aufweisen.

Nach einer günstigen Ausgestaltung des Filtermoduls können die Austrittskanäle entlang einer Achse linear nebeneinander angeordnet sein.

Nach einer günstigen Ausgestaltung des Filtermoduls kann das Filterelement im Gehäuseteil umlaufend gegenüber dem reinseitigen Luftsammelraum abgedichtet sein. Dies erlaubt eine sichere Abdichtung des Filtermoduls.

Nach einer günstigen Ausgestaltung des Filtermoduls kann das Gehäuseteil einen nach innen ragenden Dichtflanschbereich mit einer Dichtfläche zur dichten Anbindung eines weiteren Gehäuseteils mit Filterelement aufweisen. Die Anordnung ist kompakt und erlaubt eine zuverlässige Abdichtung.

Nach einer günstigen Ausgestaltung des Filtermoduls kann das Filterelement als Schwebstofffilterelement, insbesondere als EPA-Filterelement oder HEPA-Filterelement-Filterelement ausgebildet sein. Vorzugsweise weist das Filterelement mindestens die Klasse E11 nach EN 1822-3 aus dem Jahr 2009 auf.

Nach einer günstigen Ausgestaltung des Filtermoduls können wenigstens zwei Gehäuseteile vorgesehen sein, wobei an das erste Gehäuseteil ein weiteres Gehäuseteil mit einem weiteren Filterelement anschließt.

Zweckmäßigerweise kann der anströmseitige Querschnitt des weiteren Filterelements an den anströmseitigen Querschnitt des ersten Filterelements angepasst sein. Das Filtermodul kann daher im Wesentlichen frei ansaugend das Fluid, beispielsweise Luft, durch die Gehäuseteile leiten.

Günstigerweise kann ein Filtermodul mit einem Hauptfilter und einem Vorfilter geschaffen werden. Vorzugsweise ermöglicht das weitere Gehäuseteil an seiner Anströmseite eine möglichst großflächige Anströmung des weiteren Filterelements. Das weitere Filterelement kann beispielsweise ein Absorptionsfilter sein.

Nach einer günstigen Ausgestaltung des Filtermoduls können die Gehäuseteile ein oder mehrere korrespondierende Führungen und/oder Führungselemente zum Befestigen des weiteren Gehäuseteils aufweisen.

Auf diese Weise kann das weitere Gehäuseteil einfach montiert und demontiert werden. Vorteilhaft kann mittels der Führungen sichergestellt werden, dass das zweite Gehäuseteil mit eingelegtem zweiten Filterelement mit einem axialen Überstand auf das erste Gehäuseteil montiert und axial auf einer Dichtfläche des ersten Gehäuseteils verpresst werden kann. Die axiale Verpressung ermöglicht eine stabile Abdichtung der Schnittstelle zwischen erstem und zweitem Gehäuseteil.

Optional kann eine Sicherungseinrichtung vorgesehen sein, beispielsweise eine oder mehrere Schrauben, mit dem das weitere Gehäuseteil mit dem ersten Gehäuseteil verbunden werden kann. Auch bei starker Beanspruchung, beispielsweise durch Vibrationen, Temperaturwechsel und dergleichen, kann eine zuverlässige stabile Verbindung zwischen den Gehäuseteilen erreicht werden. Ebenso kann ein Verzug der Gehäuseteile, die vorzugsweise aus Kunststoff gebildet sein können, durch die Sicherungseinrichtung ausgeglichen werden.

Nach einer günstigen Ausgestaltung des Filtermoduls kann zwischen dem ersten und dem zweiten Gehäuseteil eine scharnierartige Verbindung ausgebildet sein. Die scharnierartige Verbindung erlaubt eine axiale Verpressung des Dichtelements im zweiten Gehäuseteil zwischen beiden Gehäuseteilen.

Günstigerweise kann ein Filtermodul mit einem Hauptfilter, insbesondere Schwebstofffilter, und einem Vorfilter geschaffen werden, wobei eine einfache und sichere Montage sowie ein einfacher Wechsel von Hauptfilter und Vorfilter möglich ist. Vorzugsweise ermöglicht das weitere Gehäuseteil an seiner Anströmseite eine möglichst großflächige Anströmung des weiteren Filterelements. Das weitere Filterelement kann beispielsweise ein Absorptionsfilter sein.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt.

**Es zeigen beispielhaft:**
- Fig. 1: einen Längsschnitt durch ein Filtersystem mit einem Befestigungsmodul nach einem Ausführungsbeispiel der Erfindung, welches an eine gewölbte Anschlussfläche angeschlossen ist;
- Fig. 2: einen vergrößerten Ausschnitt des Filtersystems in Fig. 1 schräg von der Kontaktseite mit der gewölbten Oberfläche her gesehen mit Fokus auf einen Verbindungsbereich des Befestigungsmoduls;
- Fig. 3: eine Explosionsdarstellung des Filtersystems in Fig. 1;
- Fig. 4: das Befestigungsmodul des Filtersystems aus Fig. 1 in isometrischer Ansicht;
- Fig.5: die gewölbte Anschlussfläche eines Fahrzeugs in isometrischer Ansicht;
- Fig. 6: das Befestigungsmodul aus Fig. 1 in einer Draufsicht von der Seite der Anschlussflansche;
- Fig. 7: einen vergrößerten Ausschnitt aus Fig. 4 mit Fokus auf einen Verbindungsbereich zwischen zwei Kanälen;
- Fig. 8: eine Ansicht eines Teils eines Filtermoduls des Filtersystems nach Figur 1 mit im Gehäuseteil eingesetztem Filterelement mit Blick auf dessen Anströmseite;
- Fig. 9: das Filtermodul nach Figur 8 von dessen Abströmseite her gesehen;
- Fig. 10: eine perspektivische Ansicht eines zweiten Gehäuseteils für ein zweites Filterelement des Filtermoduls des nach Figur 1;
- Fig. 11: eine perspektivische Ansicht des zweiten Gehäuseteils nach Figur 10 mit eingesetztem Filterelement.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

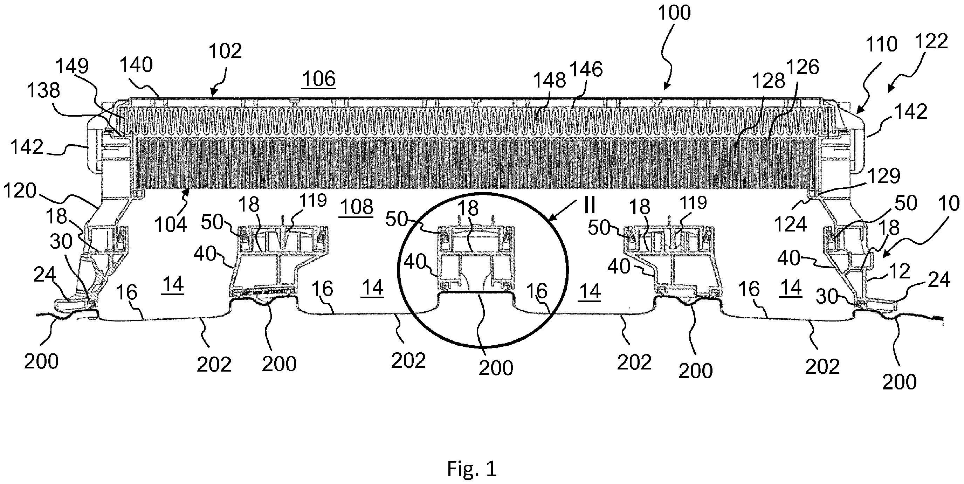

Figur 1 zeigt einen Längsschnitt durch ein Filtersystem 100 mit einem Befestigungsmodul 10 nach einem Ausführungsbeispiel der Erfindung, welches an eine gewölbte Anschlussfläche 200 angeschlossen ist. Bei dem Filtersystem 100 handelt es sich um ein Filtersystem 100 insbesondere für ein Innenraumluftfiltersystem im Fahrzeug. Die gewölbte Anschlussfläche 200 kann beispielsweise ein Tiefziehblech eines Teils der Fahrzeugkarosserie darstellen. Die gewölbte Anschlussfläche 200 weist Öffnungen 202 zum Durchtritt des Fluids auf. Das Befestigungsmodul 10 dient als separater Zwischenflansch zum Anschluss des Filtersystems 100 an die gewölbte Anschlussfläche 200 mit den Öffnungen 202 zum Durchtritt des Fluids.

Das Filtersystem 100 umfasst ein Filtermodul 122 mit einem Filtergehäuse 110, in dem wenigstens ein erstes Filterelement 126 in einem ersten Gehäuseteil 120 angeordnet ist. Das abgebildete Filtermodul 122 umfasst in diesem Ausführungsbeispiel das erste Gehäuseteil 120 sowie ein zweites Gehäuseteil 140, in dem ein zweites Filterelement 146 angeordnet ist. Das zweite Filterelement 146 dient als Vorfilter für das erste Filterelement 126. Vorzugsweise kann zumindest das zweite Filterelement 146 auswechselbar sein.

Das Filtermodul 122 trennt eine Rohseite 106 von einer Reinseite 108 des Filtersystems 100. Vorzugsweise ist das erste Filterelement 126, welches den Hauptfilter bildet, als Schwebstofffilterelement, beispielsweise als EPA- oder HEPA-Filterelement ausgebildet.

Das der Rohseite 106 nähere zweite Filterelement 146 kann beispielsweise ein Adsorptionsfilterelement zur Adsorption von Gasen sein, während das andere Filterelement 126 zur Abscheidung von Partikeln dienen kann.

Das erste Gehäuseteil 120 bildet einen Grundkörper, der von dem zweiten Gehäuseteil 140 abgedeckt ist, das vorzugsweise an seinem Eintrittsbereich 102 als Gitterteil ausgebildet ist. Dies erlaubt eine Fluidansaugung praktisch über die gesamte anströmseitige Fläche des Filtermoduls 122. Vorteilhaft sind die Filterbälge 128, 148 sowohl des ersten wie des zweiten Filterelements 126, 146 so aufeinander abgestimmt, insbesondere kann das zweite Filterelement 146 eine Querschnittsfläche aufweisen, die gleich groß oder größer als die Querschnittsfläche des ersten Filterelements 126 ist. Durch das Gitterteil (zweites Gehäuseteil 140) kann das rohseitige Fluid zu den Filterelementen 126, 146 gelangen, während grobe Fremdkörper, etwa Laub und dergleichen, durch das Gitterteil vom Filterelement 146 abgehalten werden.

Vorzugsweise ist das erste Filterelement 126 im ersten Gehäuseteil 120 fest angeordnet. Vorteilhaft kann das erste Filterelement 126 beispielsweise mit dem ersten Gehäuseteil 120 verklebt sein. Der Filterbalg 128 des ersten Filterelements 126 ist an seinen Rändern mit einem umlaufenden Band 129 abgedichtet, das an einer Seite des Filterbalgs 128, beispielsweise abströmseitig, übersteht und in einer korrespondierenden umlaufenden Nut 124 des ersten Gehäuseteils 120 eingeklebt ist.

Das zweite Filterelement 146 ist vorzugsweise im zweiten Gehäuseteil 140 angeordnet. Das zweite Filterelement 146 kann lose in das zweite Gehäuseteil 140 eingelegt sein.

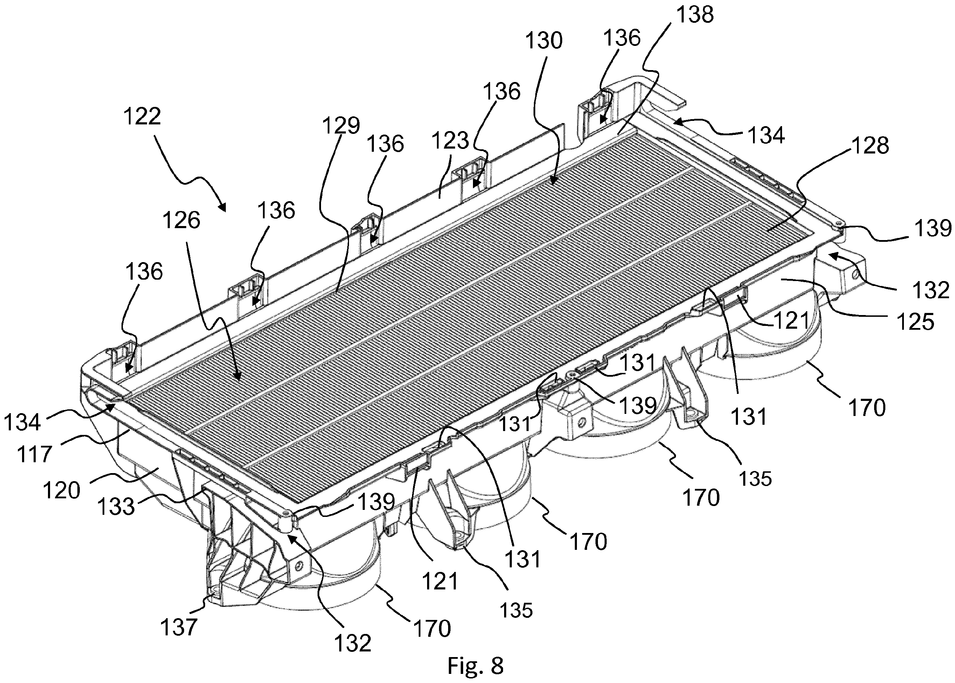

Beide Gehäuseteile 120, 140 können unlösbar oder vorzugsweise lösbar miteinander verbunden sein. Beispielsweise kann das zweite Gehäuseteil 140 auf das erste Gehäuseteil 120 aufgesteckt und mit Führungselementen 142 in seine Endposition geführt sein, wie in den Figuren 8-11 näher erläutert ist.

Die Gehäuseteile 120, 140 können bei lösbarer Verbindung miteinander verklipst, verschraubt oder in anderer geeigneter Weise miteinander verbunden sein. Bei unlösbarer Verbindung können die Gehäuseteile 120, 140 miteinander verklebt oder verschweißt sein.

Optional kann vorgesehen sein, die Gehäuseteile 120, 140 mit dem jeweiligen Filterelement 126, 146 einzeln auszutauschen, wenn der Filterbalg 128, 148 des jeweiligen Filterelements 126, 146 maximal beladen ist. Alternativ kann vorgesehen sein, das Filtermodul 122 mit beiden Gehäuseteilen 120, 140 samt Filterelementen 126, 146 insgesamt auszuwechseln.

Das Filtersystem 100 weist den Eintrittsbereich 102 im zweiten Gehäuseteil 140 für zu filterndes Fluid, also beispielsweise Luft, und unterhalb des ersten Filterelements 126 einen Austrittsbereich 104 für das gefilterte Fluid auf. Das Befestigungsmodul 10 ist mit dem Austrittsbereich 104 des Filtersystems 100 fluidisch verbunden und damit auf der Reinseite 108 des Filtersystems 100 angeordnet.

Dazu ist das erste Gehäuseteil 120 des Filtermoduls 122 gegen das Befestigungsmodul 10, insbesondere gegen starre Einzelkanalstücke 40 des Befestigungsmoduls 10, abgedichtet, in denen Kanäle 14 verlaufen, welche das gefilterte Fluid zu den Öffnungen 202 der Anschlussfläche 200 führen.

Beim Einsatz als Luftfilter wird die gefilterte Luft über das Befestigungsmodul 10 und die gewölbte Anschlussfläche 200 in den Innenraum des Fahrzeugs geleitet.

Das Befestigungsmodul 10 umfasst ein Anschlussgehäuse 12, welches mit dem Filtersystem 100 fluidisch verbunden ist, vorzugsweise mit radialer Abdichtung, und mehrere, mit den Öffnungen 202 korrespondierende, in starren Einzelkanalstücken 40 verlaufende Kanäle 14 im Anschlussgehäuse 12, die mit Anschlussflanschen 16 mit den Öffnungen 202 in der Anschlussfläche 200 verbindbar sind. Eine Abdichtung zur gewölbten Oberfläche erfolgt vorzugsweise mit einer oder mehreren Axialdichtungen 30.

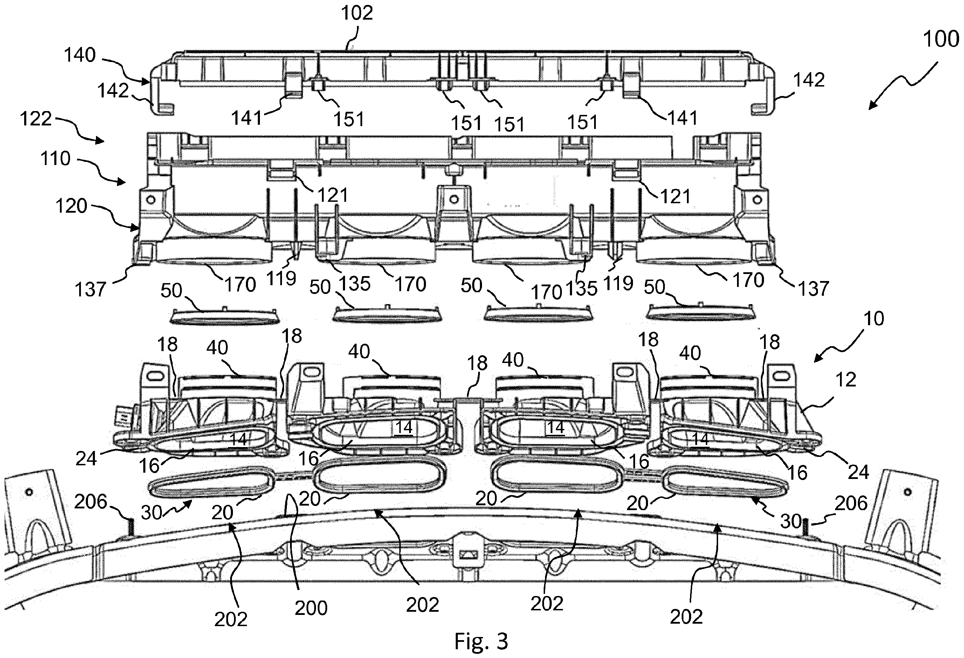

Mit den Einzelkanalstücken 40 des Befestigungsmoduls 10 korrespondieren Austrittskanäle 170 (Figuren 3, 8, 9) des ersten Gehäuseteils 120 derart, dass vom Filterelement 126 abströmseitig am Austrittsbereich 104 eine saugrohrartige Aufteilung des Volumenstroms erfolgen kann, welcher durch das Filtermodul 122 und dessen Filterelemente 126, 146 hindurchtreten, während Filtermodul 122 an seinem Eintrittsbereich 102 über seinen ganzen Querschnitt im Wesentlichen ganzflächig ansaugen kann.

Die Austrittskanäle 170 (Figuren 3, 8, 9) des ersten Gehäuseteils 120 des Filtermoduls 122 sind mit Dichtelementen 50 vorzugsweise radial gegen die Einzelkanalstücke 40 abgedichtet, wobei die Einzelkanalstücke 40 in die korrespondierenden Austrittskanäle 170 (Figuren 3, 8, 9) eintauchen und jeweils ein Dichtelement 50 jeweils ein Einzelkanalstück 40 umgibt.

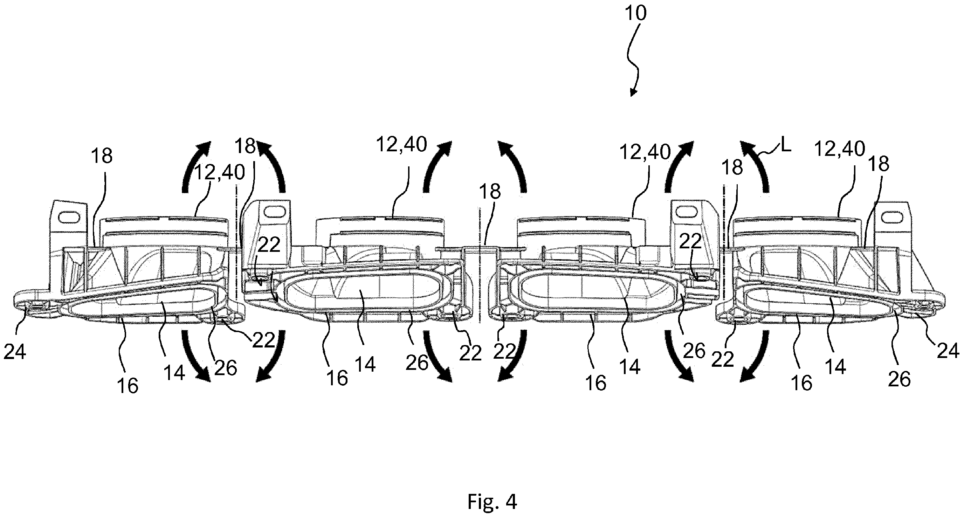

Die starren Einzelkanalstücke 40 sind über flexible Verbindungsbereiche 18 miteinander und mit dem Anschlussgehäuse 12 verbunden. Dabei sind die Verbindungsbereiche 18 zu den Einzelkanalstücken 40 in wenigstens einer Biegerichtung L (Figur 4) flexibel biegbar und/oder tordierbar ausgebildet. Vorzugsweise ist das Befestigungsmodul 10 im Bereich seiner Anschlussflansche 16 bereits passend zur gewölbten Oberfläche gewölbt ausgebildet.

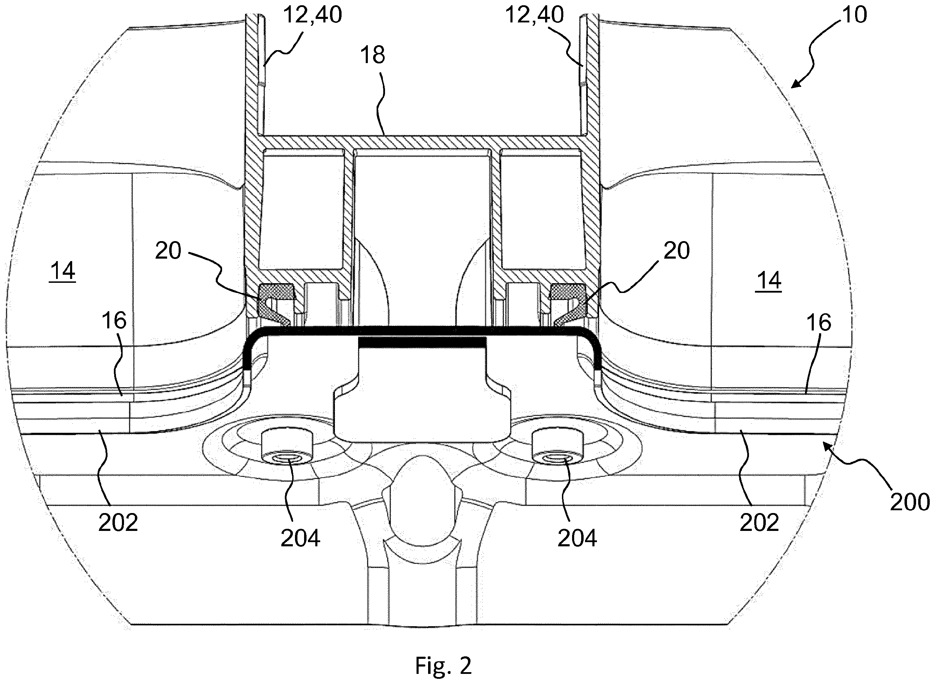

Ein Ausschnitt des Bereichs des Filtersystems 100 in dem eingezeichneten Kreis ist in Figur 2 vergrößert mit Fokus auf einen Verbindungsbereich 18 des Befestigungsmoduls 10 mit Blickrichtung von der Anschlussfläche her dargestellt. dargestellt.

Das Filtersystem 100 ist mit seinem Filtergehäuse 110 über Befestigungsdome und andere Befestigungselemente befestigt, insbesondere verschraubt.

Auf der Unterseite der gewölbten Anschlussfläche 200, welche dem Filtersystem 100 abgewandt ist, sind Befestigungspunkte 204 zu erkennen, welche beispielsweise zur Verschraubung des Befestigungsmoduls 10 und damit des Filtersystems 100 mit der gewölbten Anschlussfläche 200 dienen.

Sowohl das Anschlussgehäuse 12 als auch die in starren Einzelkanalstücken 40 verlaufenden Kanäle 14 und die flexiblen Verbindungsbereiche 18 des Befestigungsmoduls 10 können zweckmäßig aus Kunststoff, insbesondere als Spritzgussteil, ausgebildet sein. Üblicherweise ist das Filtergehäuse 110 mit wenigstens zwei Gehäuseteilen 120, 140 ausgeführt, welche zu öffnen sind, damit die Filterelemente 126, 146 bei Bedarf ausgetauscht werden können. Vorzugsweise wird das erste Filterelement 126 mit seinem Gehäuseteil 120 ausgetauscht, während das zweite Filterelement 146 separat von seinem Gehäuseteil 140 ausgetauscht werden kann.

Optional kann das Filtergehäuse 110 auch einstückig ausgebildet sein.

In dem abgebildeten Längsschnitt sind zwei benachbarte, in starren Einzelkanalstücken 40 verlaufende Kanäle 14 des Befestigungsmoduls 10 geschnitten und teilweise zu erkennen. Die Einzelkanalstücke 40 mit den Kanälen 14 weisen jeweils Anschlussflansche 16 auf, die mit den Öffnungen 202 der gewölbten Anschlussfläche 200 mit einem Dichtungssegment 20 axial dichtend verbunden sind. Zwischen den Kanälen 14 ist der Verbindungsbereich 18 zu erkennen, der erfindungsgemäß biegbar und/oder tordierbar ausgebildet ist, um eine Anpassung der Kanäle 14 an eine Winkellage der Öffnungen 202 so zu ermöglichen, dass die Kanäle 14 an die Öffnungen 202 für die gegebenen Anforderungen ausreichend fluiddicht angeschlossen werden können.

Figur 3 zeigt eine Explosionsdarstellung des Filtersystems 100 in Figur 1. Das Filtergehäuse 110 ist zweiteilig ausgebildet mit dem zweiten Gehäuseteil 140 und dem ersten Gehäuseteil 120. An der Ausgangsseite des Filtergehäuses 110 sind Austrittskanäle 170 gebildet, die mit korrespondierenden Einzelkanalstücken 40 des Befestigungsmoduls 10 jeweils eine Steckverbindung bilden, wobei zwischen den Austrittskanälen 170 und den Einzelkanalstücken 40 Dichtelemente 50 für eine vorzugsweise radiale Abdichtung vorgesehen sind. Zweckmäßigerweise können die Dichtelemente 50 als Lippendichtung ausgebildet sein, bei der die Dichtwirkung kraftlos oder zumindest kraftarm durch Verformung der Dichtlippe und nicht durch Kompression der Dichtung erfolgt. Durch die Austrittskanäle 170 erfolgt, wie oben beschrieben, eine saugrohrartige Aufteilung des Volumenstroms, der durch das Filtermodul 122 mit den Filterelementen 126, 146 strömt.

Das Befestigungsmodul 10 weist an seiner Unterseite Anschlussflansche 16 auf, die mittels axialer Abdichtung auf der gewölbten Anschlussfläche 200 abgedichtet werden. In der gezeigten Ausführung sind zur leichteren Montage je zwei geschlossene Dichtungssegmente 20 in einer Dichtung 30 zusammengefasst, die mit einem Verbindungsstück verbunden sind. Die Dichtungssegmente 20 können jeweils Lippendichtungen sein oder optional Rundschnurringe oder andere Dichtungen wie beispielsweise X-Ringdichtungen. Das Befestigungsmodul 10 wird mit seinen Zentrieraufnahmen 24 an den Zentrierstiften 206 ausgerichtet und befestigt sowie an Befestigungspunkten mit der gewölbten Anschlussfläche 200 verschraubt. Die Zentrierstifte 206 können ein Gewinde aufweisen, so dass das Filtermodul 122 mit seinem Filtergehäuse 110 daran angeschraubt werden kann. Hierzu weist das erste Gehäuseteil 120 des Filtermoduls 122 an seiner Unterseite an beiden Seiten je einen Befestigungsdom 137 auf, der über den seitlichen Zentrieraufnahmen 24 positioniert wird und in den die Zentrierstifte 206 hineinragen.

Weiterhin sind an der Unterseite des ersten Gehäuseteils 120 Zapfen 119 vorgesehen, welche das erste Gehäuseteil 120 am Befestigungsmodul 10 zentrieren helfen.

In der gezeigten Ausführung enden die Kanäle 14 des Befestigungsmoduls 10 an der gewölbten Anschlussfläche 200. Optional kann vorgesehen sein, dass die Kanäle 14 in die Öffnungen 202 der gewölbten Anschlussfläche 200 hineinragen. Dies erlaubt, beispielsweise separate Fluidleitungen an die Kanäle 14 anzuschließen. Dadurch kann eine separate Abdichtung des Befestigungsmoduls 10 gegen die gewölbte Anschlussfläche 200 eingespart werden.

Figur 4 zeigt das Befestigungsmodul 10 aus Figur 1 in isometrischer Ansicht. Dabei sind mögliche Biegerichtungen L der Verbindungsbereiche 18 durch gekrümmte Pfeile dargestellt. Eine Biegung ist in alle Raumrichtungen möglich. Damit lassen sich die Anschlussflansche 16 der in den Einzelkanalstücken 40 verlaufenden Kanäle 14 des Befestigungsmoduls 10 im Wesentlichen in dieser einen Biegerichtung L an die Öffnungen 202 der gewölbten Anschlussfläche 200 anpassen. Alternativ können die Verbindungsbereiche 18 jedoch auch in schräg zueinander liegenden Richtungen, insbesondere in zwei zueinander senkrecht stehenden Richtungen biegbar und/oder tordierbar ausgebildet sein. Damit lassen sich die Anschlussflansche 16 der Kanäle 14 des Befestigungsmoduls 10 sehr viel flexibler an die Öffnungen 202 der gewölbten Anschlussfläche 200 anpassen.

An jedem Anschlussflansch 16 ist eine Dichtfläche vorgesehen, beispielsweise eine Dichtnut 26, in welche ein Dichtring eingelegt werden kann.

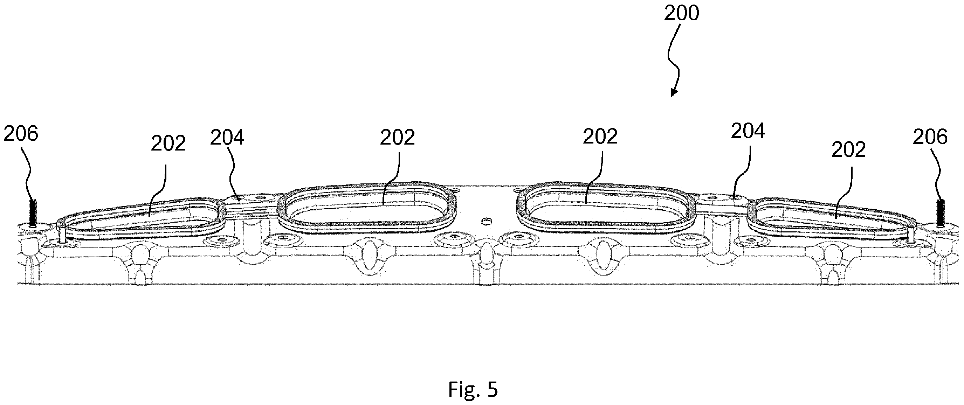

Bei dem Befestigungsmodul 10 sind am Rand Zentrieraufnahmen 24 zu erkennen, worüber das Befestigungsmodul 10 durch Aufnahme entsprechender Zentrierstifte 206 (siehe Figur 5) sich beim Anschluss an die gewölbten Anschlussfläche 200 auf dieser Anschlussfläche 200 zentrieren lässt. Die Zentrierstifte 206 können ein Gewinde aufweisen.

An der Schnittstellenfläche des Befestigungsmoduls 10 zu der gewölbten Anschlussfläche 200 hin sind weiter Befestigungsdome 22 zu erkennen, welche zur Verschraubung des Befestigungsmoduls 10 mit der gewölbten Anschlussfläche 200 dienen. Beispielsweise können an jedem Anschlussflansch16 zwei Befestigungsdome 22 vorgesehen sein.

In Figur 5 ist die gewölbte Anschlussfläche 200 eines Fahrzeugs in isometrischer Ansicht dargestellt. Die Wölbung der Anschlussfläche 200 ist in der isometrischen Ansicht klar zu erkennen. Die Öffnungen 202 mit ihren Querschnittsflächen liegen nicht in einer Ebene, sodass die Anschlussflansche 16 von Kanälen 14 eines Befestigungsmoduls 10 sich gegeneinander verbiegen lassen müssen, um die Anschlussflansche 16 jeweils dicht an die verschiedenen Öffnungen 202 anschließen zu können. Zweckmäßigerweise sind die Anschlussflansche gewölbt konstruiert und damit bereits an die Form der gewölbten Anschlussfläche 200 angepasst. Mittels der flexiblen Verbindungsbereiche 18 des Befestigungsmoduls 10 kann auf einfache Weise ein Toleranzausgleich erfolgen.

Auf der gewölbten Anschlussfläche 200 sind Befestigungspunkte 204 für eine Verschraubung des Befestigungsmoduls 10 mit der Anschlussfläche 200 angeordnet. Zu beiden Seiten der dargestellten vier Öffnungen 202 sind Zentrierstifte 206 zum Zentrieren des Befestigungsmoduls 10 bei der Montage auf der gewölbten Anschlussfläche 200 vorhanden, welche mit den Zentrieraufnahmen 24 des Befestigungsmoduls 10 zusammenwirken.

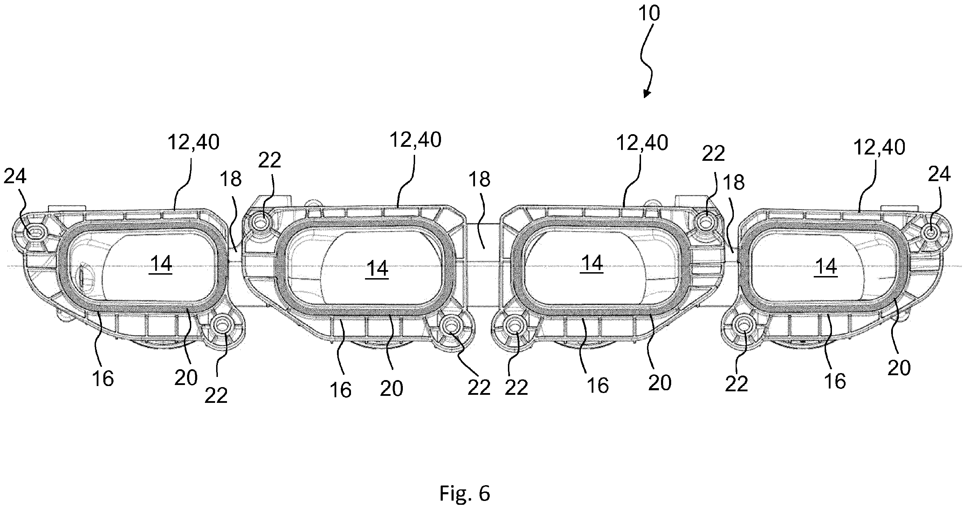

In Figur 6 ist das Befestigungsmodul 10 aus Figur 1 in einer Draufsicht von der Seite der Anschlussflansche 16 gezeigt. Die Kanäle 14 münden in die Anschlussflansche 16, welche von Dichtungssegmenten 20, die in Dichtungsnuten 26 angeordnet sind, umlaufend umgeben sind. Die Verbindungsbereiche 18 zwischen den einzelnen starren Einzelkanalstücken 40 sind teilweise unterschiedlich ausgeprägt. Die Verbindungsbereiche 18 sind jedoch alle biegbar und/oder tordierbar ausgeführt, sodass die Anschlussflansche 16 an die Öffnungen 202 der gewölbten Anschlussfläche 200 angepasst angeschlossen werden können. Benachbart zu den Anschlussflanschen 16 sind die Befestigungsdome 22 zu erkennen.

Das Dichtungssegment 20 kann als Rundschnur-Dichtung ausgebildet sein, welche in einer am Anschlussflansch 16 umlaufenden Dichtungsnut 26 eingelegt ist. Das Dichtungssegment 20 kann beispielsweise als axiale Lippendichtung ausgebildet sein.

Alternativ können auch mehrere Anschlussflansche 16 eine gemeinsame, umlaufende Dichtung 30 aufweisen (Figur 3). Die Dichtung 30 (Figur 3) kann optional aus zwei oder mehr geschlossenen, miteinander verbundenen Dichtungssegmenten 20 zusammengesetzt sein.

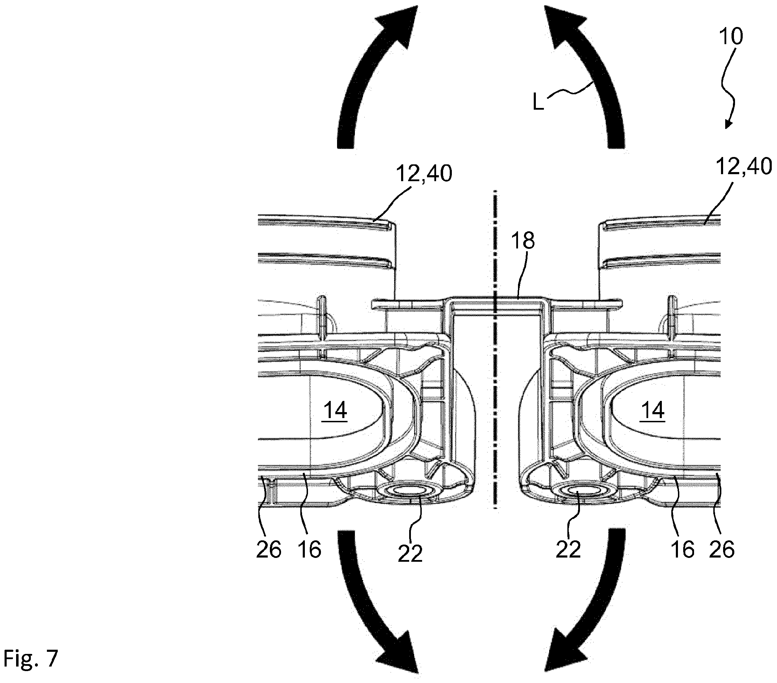

In Figur 7 ist ein vergrößerter Ausschnitt des Befestigungsmoduls 10 aus Figur 4 mit Fokus auf einen Verbindungsbereich 18 zwischen zwei Anschlussflanschen 16 zu sehen. Der Verbindungsbereich 18 ist als Steg ausgebildet, der sich in den Biegerichtungen L biegen lässt, wodurch die Kanäle 14 mit ihren Anschlussflanschen 16 sich in diesen Biegerichtungen L neigen lassen. Dadurch kann eine Anpassung an geneigte Öffnungen 202 der gewölbten Anschlussfläche 200 erfolgen und die Anschlussflansche 16 an die Öffnungen 202 dicht angeschlossen werden. Im Bereich der Verbindungsbereiche 18 kann die Materialstärke des Anschlussgehäuses 12 reduziert sein. Dadurch lässt sich der Steg 18 leichter biegen. Alternativ kann der Verbindungsbereich 18 auch als Scharnier, insbesondere als Filmscharnier ausgebildet sein, wodurch sich auch eine Biegefähigkeit des Verbindungsbereichs 18 erreichen lässt. Hierdurch sind eine Handhabung und die Herstellung des Befestigungsmoduls 10 vereinfacht.

Die Figuren 8 bis 11 zeigen die Gehäuseteile 120, 140 des Filtermoduls 122 nach Figur 1.

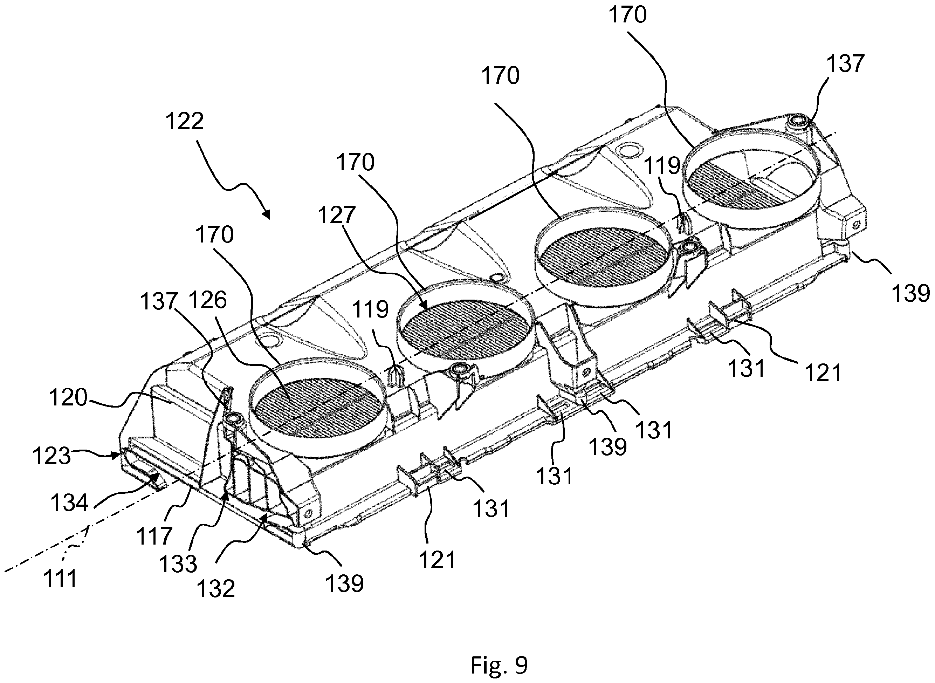

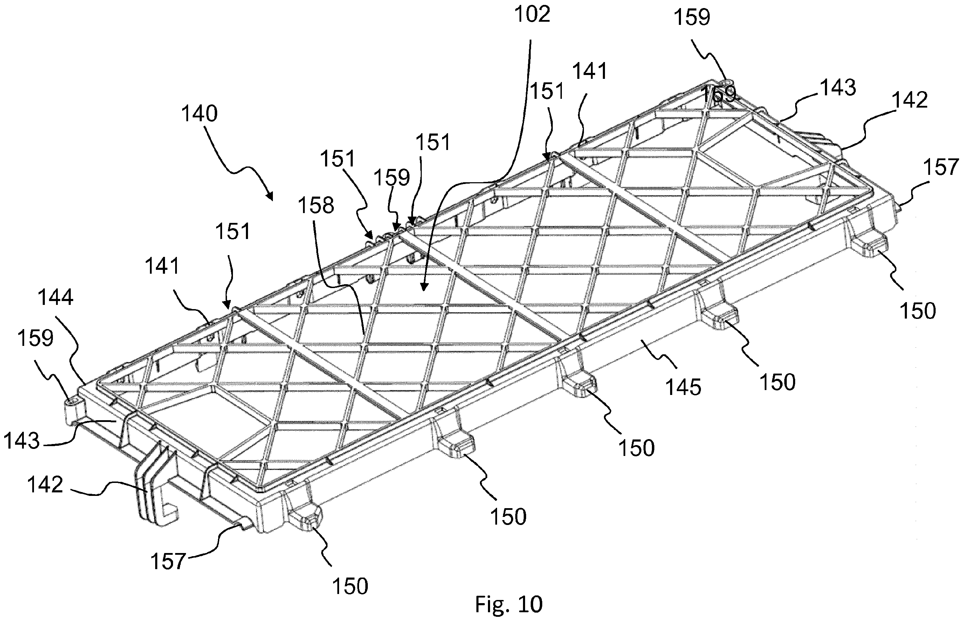

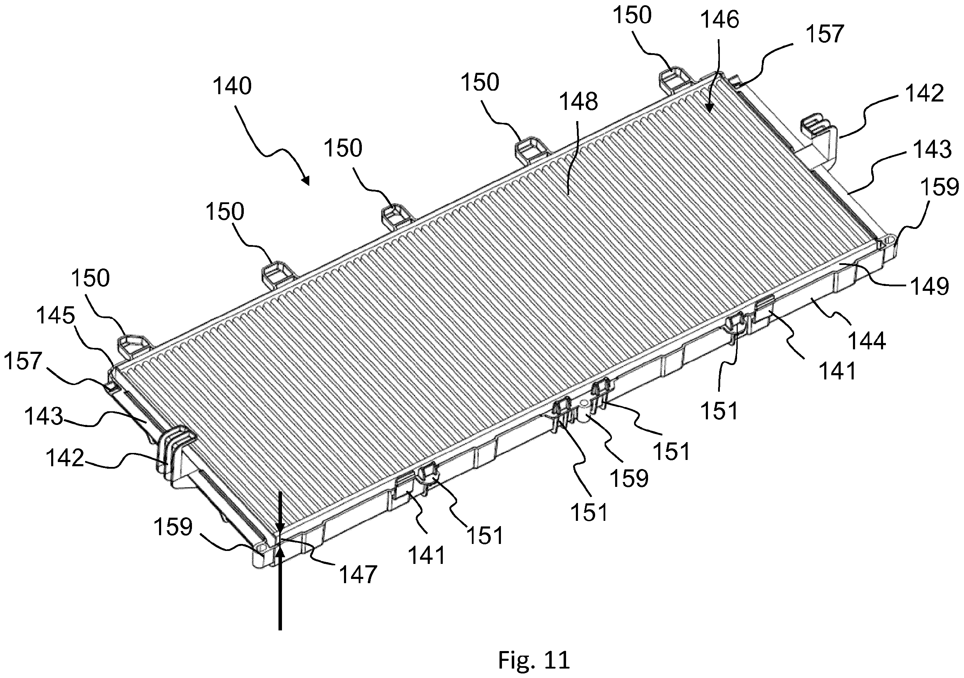

Figur 8 zeigt dabei eine Ansicht des ersten Gehäuseteils 120 des Gehäuses 110 des Filtermoduls 122 nach Figur 1 mit eingesetztem Filterelement 126 mit Blick auf dessen Anströmseite. Im Filtermodul 122 nach dem Ausführungsbeispiel in Figur 1 ist die Anströmseite durch das zweite Filterelement 146 im zweiten Gehäuseteil 140 abgedeckt. Figur 9 zeigt eine perspektivische Ansicht des Teils des Filtermoduls 122 aus Figur 8 von dessen Abströmseite her gesehen. Optional kann, je nach Einsatzgebiet des Filtermoduls 122, auf ein zweites Filterelement 146 verzichtet werden. Figur 10 zeigt eine perspektivische Ansicht eines zweiten Gehäuseteils 140 ohne Filterelement 146 von der Außenseite, während Figur 11 das zweite Gehäuseteil 140 mit Filterelement 146 mit Blick auf dessen Abströmseite zeigt.

Das Filterelement 126 ist vorzugsweise als Schwebstofffilterelement, insbesondere als EPA- oder HEPA-Filterelement ausgebildet.

Das Gehäuseteil 120 ist vorzugsweise wannenartig ausgebildet und weist in diesem Ausführungsbeispiel eine rechteckige Aufnahme 130 für das Filterelement 126 auf, das beispielsweise einen einfachen rechteckigen Filterbalg 128 aufweisen kann. Durch die wannenartige Struktur des Gehäuseteils 120 ist reinseitig des Filterelements 126 im Gehäuseteil 120 ein Luftsammelraum 127 ausgebildet.

Die Aufnahme 130 ist von zwei gegenüberliegenden langen Seiten 123, 125 und zwei sich gegenüberliegenden schmalen Seiten 117 umgeben, welche die langen Seiten 123, 125 verbinden.

Die eine Seite 123 der Aufnahme 130 des ersten Gehäuseteils 120, vorzugsweise einer Langseite, weist eine Seitenwand auf, die über die Dichtfläche 138 axial übersteht. Der Rand der gegenüberliegenden Seite 125 des Gehäuseteils 120 fluchtet mit der Dichtfläche 138. Das in die Aufnahme 130 eingesetzte Filterelement 126 schließt das Gehäuseteil 120 zur Anströmseite ab und trennt die Anströmseite von dem Luftsammelraum 127.

Der Filterbalg 128 ist mit einem umlaufenden Band 129 abgedichtet. Das umlaufende Band 129 steht, wie in Figur 1 dargestellt, zur Reinseite des Filterelements 126 hin über und ist in eine in der Figur nicht erkennbare umlaufende Nut 124 (Figur 1) des Gehäuseteils 120 eingeklebt. Hierdurch ist das Filterelement 126 günstigerweise umlaufend gegenüber dem reinseitigen Luftsammelraum 127 abgedichtet.

Die Aufnahme 130 für das Filterelement 126 ist ferner von einer entlang den Seiten 123, 117, 125, 117 umlaufenden Dichtfläche 138 umgeben. Die umlaufende Dichtfläche 138 ist an nach innen in das Gehäuseteil 120 ragenden Dichtflanschbereichen ausgebildet. Dies ermöglicht eine dichte Anbindung des weiteren Gehäuseteils 140 mit dem zweiten Filterelement 146 (Figur 11).

Die Ausbildung des Filtermoduls 122 ist vorzugsweise derart, dass dieses quasi frei ansaugend zumindest über seinen Querschnitt im Gehäuseteil 120 bzw. über den Querschnitt des darin angeordneten Filterelements 126 eine saugrohrartige Aufteilung des Volumenstroms, der durch den Filterbalg 128 des Filterelements 126 hindurchtreten, entsprechend den durch Einzelkanalstücke 40 (Figur 1, 3) definierten Ansaugöffnungen der Anschlussflansche 16 (Figuren 1 bis 4) des Befestigungsmoduls 10 ermöglicht. Abströmseitig weist das Gehäuseteil 120 mindestens zwei, vorzugsweise mindestens drei Austrittskanäle 170 für das Fluid in saugrohrartiger Anordnung auf. In diesem Ausführungsbeispiel liegen die Austrittskanäle 170 in einer Ebene und fluchten miteinander entlang einer Achse 111.

In der Seitenwand der Seite 123 sind fünf konkave Aufnahmen 136 angeordnet, in welche zungenartige Vorsprünge 150 (Figuren 10, 11) in horizontaler Richtung einschiebbar sind. Aufnahmen 136 und Vorsprünge 150 bilden eine scharnierartige Verbindung.

Ferner sind an beiden Enden der Seite 123 Führungen 134 angeordnet, die rechtwinklig von der Seitenwand 123 abstehen und parallel zu den schmalen Seiten 117 verlaufen.

Die Führungen 134 verlaufen neben und oberhalb der Dichtfläche 138 des ersten Gehäuseteils 120.

An der gegenüberliegenden langen Seite 125 des Gehäuseteils 120 sind optional drei Befestigungsdome 139, insbesondere Schraubdome, angeordnet, in welchen das zweite Gehäuseteil 140 mittels Schrauben gesichert werden kann. Hiermit kann ein Verzug der beiden Gehäuseteile 120, 140 ausgeglichen werden.

Ferner sind an der gegenüberliegenden langen Seite 125 des Gehäuseteils 120 zwei Rastelemente 121, beispielsweise Rastnasen, vorgesehen, an denen korrespondierende Rastgegenelemente 141, beispielsweise Rasthaken, des zweiten Gehäuseteils 140, in axialer Richtung verrastbar sind.

Weiterhin sind zwischen den beiden Rastelementen 121 vier Zentrierelemente 131 ausgebildet, wobei die mittleren beiden benachbart zu beiden Seiten des mittleren der Befestigungsdome 139 angeordnet sind. Die Zentrierelemente 131 sind beispielsweise als Ösen ausgebildet, um korrespondierende Zentriergegenelemente 151 des zweiten Gehäuseteils 140, die beispielsweise als Zapfen ausgebildet sind, aufzunehmen.

Das zweite Gehäuseteil 140 ist in den Figuren 10 und 11 näher beschrieben. Am Eintrittsbereich 102 weist das Gehäuseteil 140 ein Gitter 158 auf, so dass Fluid, beispielsweise Luft, im Wesentlichen ungehindert in das Gehäuseteil 140 und das darin angeordnete Filterelement 146 eintreten kann. Das Filterelement 146 kann lose in eine Aufnahme des zweiten Gehäuseteils 140 eingelegt werden und dort durch leichte Verpressung zur Montage fixiert sein.

Der Filterbalg 148 des zweiten Filterelements 146 ist an seinen Rändern mit einem Band 149 abgedichtet, wobei zumindest an den Langseiten vorzugsweise ein stark komprimierbares, beispielsweise schaumartiges Band 149 vorgesehen ist, das in axialer Richtung stark komprimiert werden kann, während an den Schmalseiten dasselbe oder ein weniger komprimierbares Band vorgesehen sein kann. Das Band 149 weist zumindest an den Langseiten einen Überstand 147 auf, der beispielsweise mehrere Millimeter betragen kann. Der Überstand 147 kann an den Langseiten und Schmalseiten gleich groß sein.

Auf einer langen Seite 145 des Gehäuseteils 140 sind zungenartige Vorsprünge 150 angeordnet, die mit den Aufnahmen 136 im ersten Gehäuseteil 120 korrespondieren.

Auf der gegenüberliegenden langen Seite 144 sind die mit den Rastelementen 121 des ersten Gehäuseteils 120 korrespondierenden Rastgegenelemente 141, beispielsweise Rasthaken, sowie die mit den Zentrierelementen 131 des ersten Gehäuseteils 120 korrespondierenden Zentriergegenelemente 151, beispielsweise Zapfen, sowie mit den Befestigungsdomen 139 des ersten Gehäuseteils 120 korrespondierende Befestigungsdome 159 angeordnet.

An den schmalen Seiten 143 des zweiten Gehäuseteils 140 ist jeweils ein Führungselement 142 angeordnet, das beispielsweise mit einem langen Schenkel und einem kurzen Schenkel in etwa L-förmig ausgebildet ist. Die kurzen Schenkel weisen zum Gehäuseteil 140. Die langen Schenkel der Führung sind außerhalb eines Randsegments 157 der schmalen Seiten 143 angeordnet.

Das Zusammenwirken der Gehäuseteile 120, 140 beim Zusammenbau ist im Folgenden in Zusammenschau der Figuren 8 bis 11 erläutert.

An den beiden schmalen Seiten 117 des ersten Gehäuseteils 120, welche die überstehende Seitenwand der Seite 123 und die dieser gegenüberliegenden Seite 125 verbinden, sind Führungen 132, 134 vorgesehen, die zum Aufschieben des zweiten Gehäuseteils 140 auf das erste Gehäuseteil 120 dienen. Das zweite Gehäuseteil 140 wird seitlich auf das erste Gehäuseteil 120 aufgeschoben, wobei das zweite Gehäuseteil 140 im Wesentlichen horizontal zur Dichtfläche 138 des ersten Gehäuseteils 120 eingeschoben wird.

Das Führungselement 142 auf beiden schmalen Seiten 143 des zweiten Gehäuseteils 140 kommt in Montagerichtung mit seinem kurzen Schenkel mit einer Führungsfläche der ersten Führung 132 in Eingriff, wenn das zweite Gehäuseteil 140 seitlich auf das erste Gehäuseteil 120 aufgeschoben wird. Die erste Führung 132 verläuft neben und unterhalb der Dichtfläche 138 und ist konvex zur Dichtfläche 138 hin gewölbt.

Der lange Schenkel des jeweiligen Führungselements 142 weist eine Länge auf, die sicherstellt, dass beim Aufschieben des zweiten Gehäuseteils 140 ein ausreichender Freiraum des zweiten Filterelements 146 über der Dichtfläche 138 und dem ersten Filterelement 126 verbleibt. Das Band 149 und die Filterelemente 126, 146 sind somit trotz des Überstands 147 beim Aufschieben vor Beschädigungen ausreichend geschützt.

Auf jeder der schmalen Seiten 143 des zweiten Gehäuseteils 140 kommt kurz vor der Endposition das vorlaufende Randsegment 157 des zweiten Gehäuseteils 140 mit der zweiten Führungsfläche 134 in Eingriff.

Die Führungsfläche der ersten Führung 132 endet an einem Ende 133, womit das jeweilige Führungselement 142 des zweiten Gehäuseteils 140 sich nach unten, weg von der Dichtfläche 138, bewegen kann.

In diesem Zustand sind die Randsegmente 157 des ersten Gehäuseteils 140 in der zweiten Führung 134 des ersten Gehäuseteils 120 eingeführt und axial gehalten. Weiterhin sind die Vorsprünge 50 an der vorlaufenden Seite 145 des zweiten Gehäuseteils 140 in die konkaven Aufnahmen 136 in der überstehenden Seitenwand des ersten Gehäuseteils 120 eingetaucht und axial fixiert.

Die Vorsprünge 150 und Aufnahmen 136 bilden eine scharnierartige Verbindung so, dass das zweite Gehäuseteil 140 an seiner der scharnierartigen Verbindung gegenüberliegenden Seite 144 in Richtung des ersten Gehäuseteils 120 gedrückt werden kann, wobei die Zentrierelemente 131 an der Seite 125 des ersten Gehäuseteils 120 und die Zentriergegenelemente 151 an der Seite 144 des zweiten Gehäuseteils 140 ineinandergreifen, bis die Rastelemente 121 mit den Rastgegenelementen 141 verrasten. Dabei wird das Band 149 des zweiten Filterelements 146 axial so verpresst, dass eine gute Abdichtung zwischen dem zweiten Filterelement 146 und der Dichtfläche 138 des ersten Gehäuseteils 120 erreicht wird. Anschließend kann das zweite Gehäuseteil 140 mit dem ersten Gehäuseteil 120 mittels der jeweiligen Befestigungsdome 139, 159 verschraubt werden.

Das Gehäuseteil 120 ist im Betriebszustand mit seinen Austrittskanälen 170 über den jeweiligen Einzelkanalstücken 40 mit den Anschlussflanschen 16 angeordnet. Mittels der seitlich angeordneten Befestigungsdome 137 sowie an der der axial überstehenden Seitenwand 123 gegenüberliegenden Seite 125 angeordneter Befestigungsdome 135 kann das Filtermodul 122 über das erste Gehäuseteil 120 an der Anschlussfläche 200 (Figuren 1, 3) befestigt werden.

## Patentansprüche

1. Befestigungsmodul (10) zum Anschluss eines Filtersystems (100) an eine gewölbte Anschlussfläche (200) mit Öffnungen (202) zum Durchtritt eines Fluids, **gekennzeichnet durch**
wenigstens ein Anschlussgehäuse (12), welches bestimmungsgemäß mit dem Filtersystem (100) fluidisch verbindbar ist und in dem mehrere mit den Öffnungen (202) korrespondierende, in starren Einzelkanalstücken (40) verlaufende Kanäle (14) vorgesehen sind, die mittels Anschlussflanschen (16) mit den Öffnungen (202) in der Anschlussfläche (200) verbindbar sind, wobei die starren Einzelkanalstücke (40) über flexible Verbindungsbereiche (18) miteinander und/oder mit dem Anschlussgehäuse (12) verbunden sind.

2. Befestigungsmodul nach Anspruch 1, wobei die Verbindungsbereiche (18) in schräg zueinander liegenden Richtungen, insbesondere in zwei zueinander senkrecht stehenden Richtungen biegbar und/oder tordierbar ausgebildet sind.

3. Befestigungsmodul nach einem der vorhergehenden Ansprüche, wobei ein Anschlussflansch (16) ein umlaufendes Dichtungssegment (20) aufweist, insbesondere wobei das Dichtungssegment (20) als axiale Lippendichtung ausgebildet ist.

4. Befestigungsmodul nach Anspruch 3, wobei mehrere Anschlussflansche (16) eine gemeinsame, umlaufende Dichtung (30) aufweisen, wobei zumindest zwei geschlossene Dichtungssegmente (20) in einer Dichtung (30) zusammengefasst, insbesondere mit einem Verbindungsstück verbunden, sind.

5. Befestigungsmodul nach einem der vorhergehenden Ansprüche, wobei die Verbindungsbereiche (18) als Scharniere ausgestaltet sind.

6. Filtersystem (100) mit einem Befestigungsmodul (10) zum Anschluss an eine gewölbte Anschlussfläche (200), nach einem der vorhergehenden Ansprüche, umfassend
- ein Filtergehäuse (110),
- wenigstens ein Filterelement (126, 146), welches in dem Filtergehäuse (110) angeordnet ist, und welches eine Rohseite (106) von einer Reinseite (108) trennt,
- einen Eintrittsbereich (102) für zu filterndes Fluid und einen Austrittsbereich (104) für gefiltertes Fluid,
wobei das Befestigungsmodul (10) mit dem Eintrittsbereich (102) oder dem Austrittsbereich (104) fluidisch verbunden ist.

7. Filtersystem nach Anspruch 6, wobei das Befestigungsmodul (10) auf einer Reinseite (108) des Filtersystems (100) angeordnet ist.

8. Filtersystem nach Anspruch 6 oder 7, wobei das Befestigungsmodul (10) eine axiale Abdichtung gegenüber der Anschlussfläche (200) aufweist und/oder wobei das Befestigungsmodul (10) eine radiale Abdichtung zum Filtergehäuse (110) aufweist.

9. Filtersystem nach einem der Ansprüche 6 bis 8, umfassend wenigstens ein Filtermodul (122), mit wenigstens einem Gehäuseteil (120) des Filtergehäuses (110) mit wenigstens einem Filterelement (126) in dem Gehäuseteil (120), wobei das Filtermodul (122) über seinen Querschnitt im Wesentlichen frei ansaugend vorgesehen ist und eine saugrohrartige Aufteilung von einem durch das Filterelement (126) hindurchtretenden Volumenstroms durch wenigstens zwei Austrittskanäle (170) im Gehäuseteil (120) ermöglicht ist, die mit in Einzelkanalstücken (40) des Befestigungsmoduls (10) verlaufenden Kanälen (14) fluidisch verbunden sind.

10. Filtersystem nach einem der Ansprüche 6 bis 9, wobei das erste Filterelement (126) einem weiteren Filterelement (146) strömungsmäßig nachgeordnet ist, wobei die beiden Filterelemente (126, 146) vorzugsweise jeweils in separaten Gehäuseteilen (120, 140) des Filtergehäuses (110) angeordnet sind, die insbesondere lösbar miteinander verbunden sind.

11. Filtermodul (122) für ein Filtersystem (100) nach einem der Ansprüche 6 bis 10, umfassend wenigstens ein Gehäuseteil (120) mit einem Filterelement (126) in dem Gehäuseteil (120), wobei das Filtermodul (122) im Wesentlichen über seinen Querschnitt frei ansaugend eine saugrohrartige Aufteilung von einem durch das Filterelement (126) hindurchtretenden Volumenstrom ermöglicht.

12. Filtermodul nach Anspruch 11, wobei das Gehäuseteil (120) zur saugrohrartigen Aufteilung des Volumenstroms wenigstens zwei Austrittskanäle (170) aufweist.

13. Filtermodul nach Anspruch 11 oder 12, wobei das Gehäuseteil (120) wannenartig ausgebildet ist, so dass abströmseitig des darin angeordneten Filterelements (126) ein reinseitiger Luftsammelraum (127) ausgebildet ist.

14. Filtermodul nach Anspruch 13, wobei das Gehäuseteil (120) abströmseitig wenigstens zwei Austrittskanäle (170) aufweist, die fluidisch an den Luftsammelraum (127) angeschlossen sind, wobei bevorzugt das Gehäuseteil (120) abströmseitig wenigstens drei Austrittskanäle (170) aufweist, die fluidisch an den Luftsammelraum (127) angeschlossen sind.

15. Filtermodul nach einem der Ansprüche 11 bis 14, wobei die Austrittskanäle (170) entlang einer Achse (111) linear nebeneinander angeordnet sind.

16. Filtermodul nach einem der Ansprüche 11 bis 15, wobei das Filterelement (126) im Gehäuseteil (120) umlaufend gegenüber dem reinseitigen Luftsammelraum (127) abgedichtet ist.

17. Filtermodul nach einem der Ansprüche 11 bis 16, wobei das Gehäuseteil (120) einen nach innen ragenden Dichtflanschbereich mit einer Dichtfläche (138) zur dichten Anbindung eines weiteren Gehäuseteils (140) mit Filterelement (146) aufweist.

18. Filtermodul nach einem der Ansprüche 11 bis 17, wobei wenigstens zwei Gehäuseteile (120, 140) vorgesehen sind, wobei an das Gehäuseteil (120) ein weiteres Gehäuseteil (140) mit einem weiteren Filterelement (146) anschließt.

19. Filtermodul nach Anspruch 18, wobei die Gehäuseteile (120, 140) ein oder mehrere korrespondierende Führungen (132, 134) und/oder Führungselemente (142) zum Befestigen des weiteren Gehäuseteils (140) umfassen.

## Claims

1. Attachment module (10) for connecting a filter system (100) to a curved connecting surface (200) with openings (202) for the passage of a fluid,
**characterized by**
at least one connecting housing (12) which can be fluidically connected to the filter system (100) as intended and in which a plurality of channels (14) corresponding to the openings (202) and extending in rigid individual channel sections (40) are provided which can be connected to the openings (202) in the connecting surface (200) using connecting flanges (16), wherein the rigid individual channel sections (40) are connected to one another and/or to the connecting housing (12) using flexible connecting portions (18).

2. Attachment module according to claim 1, wherein the connecting portions (18) are designed to be bendable and/or torsionable in directions oblique to each other, in particular in two directions perpendicular to each other.

3. Attachment module according to one of the preceding claims, wherein a connecting flange (16) features a circumferential seal segment (20), in particular wherein the seal segment (20) is designed as axial lip seal.

4. Attachment module according to claim 3, wherein several connecting flanges (16) feature a common, circumferential seal (30), wherein at least two closed seal segments (20) are combined in one seal (30), in particular connected to a connecting piece.

5. Attachment module according to one of the preceding claims, wherein the connecting portions (18) are configured as hinges.

6. Filter system (100) with an attachment module (10) for connection to a curved connecting surface (200), according to one of the preceding claims, comprising
- a filter housing (110),
- at least one filter element (126, 146) that is disposed in the filter housing (110), and which separates a raw side (106) from a clean side (108),
- an inlet area (102) for fluid to be filtered and an outlet area (104) for filtered fluid,
wherein the attachment module (10) is fluidically connected to the inlet area (102) or the outlet area (104).

7. Filter system according to claim 6, wherein the attachment module (10) is disposed on a clean side (108) of the filter system (100).

8. Filter system according to claim 6 or 7, wherein the attachment module (10) features an axial sealing with respect to the connecting surface (200) and/or wherein the attachment module (10) features a radial sealing with respect to the filter housing (110).

9. Filter system according to one of the claims 6 to 8, comprising at least one filter module (122), with at least one housing component (120) of the filter housing (110) with at least one filter element (126) in the housing component (120), wherein the filter module (122) is provided with substantially free suction over its cross-section and a suction pipe-like division of a volume flow passing through the filter element (126) is made possible by at least two outlet channels (170) in the housing component (120), which are fluidically connected to channels (14) extending in individual channel sections (40) of the attachment module (10).

10. Filter system according to one of the claims 6 to 9, wherein the first filter element (126) is located fluidically downstream of a further filter element (146), wherein the two filter elements (126, 146) are preferably each disposed in separate housing components (120, 140) of the filter housing (110) which are in particular detachably interconnected.

11. Filter module (122) for a filter system (100) according to one of the claims 6 to 10, comprising at least one housing component (120) with a filter element (126) in the housing component (120), wherein the filter module (122) allows, substantially over its cross-section, a freely aspirating suction tube-like division of a volume flow passing through the filter element (126).

12. Filter module according to claim 11, wherein the housing component (120) features at least two outlet channels (170) for a suction pipe-like division of the volume flow.

13. Filter module according to claim 11 or 12, wherein the housing component (120) is trough-shaped so that a clean-sided air collecting space (127) on the outflow side of the filter element (126) is disposed therein.

14. Filter module according to claim 13, wherein the housing component (120) features at least two outlet channels (170) on the outflow side, which are fluidically connected to the air collecting space (127), wherein preferably the housing component (120) features at least three outlet channels (170) on the outflow side, which are fluidically connected to the air collecting space (127).

15. Filter module according to one of the claims 11 to 14, wherein the outlet channels (170) are linearly disposed adjacent to each other along an axis (111).

16. Filter module according to one of the claims 11 to 15, wherein the filter element (126) in the housing component (120) is circumferentially sealed with respect to the clean-sided air collecting space (126).

17. Filter module according to one of the claims 11 to 16, wherein the housing component (120) features an inwardly projecting sealing flange area with a sealing surface (138) for the sealed connection of a further housing component (140) with filter element (146).

18. Filter module according to one of the claims 11 to 17, wherein at least two housing components (120, 140) are provided, wherein a further housing component (140) with a further filter element (146) is connected to the housing component (120).

19. Filter module according to claim 18, wherein the housing components (120, 140) comprise one or more corresponding guides (132, 134) and/or guide elements (142) for fastening the further housing component (140).

## Revendications

1. Module de fixation (10) pour le raccordement d'un système de filtre (100) à une surface de raccordement (200) bombée avec des ouvertures (202) pour le passage d'un fluide, **caractérisé par**
au moins un boîtier de raccordement (12) qui peut être relié fluidiquement, conformément à l'utilisation prévue, au système de filtre (100) et dans lequel sont prévus une pluralité de canaux (14) évoluant dans des sections de canal individuelles (40) rigides et correspondants aux ouvertures (202), les canaux pouvant être reliés, au moyen de brides de raccordement (16), aux ouvertures (202) dans la surface de raccordement (200), les sections de canal individuelles (40) rigides étant reliées les unes aux autres et/ou au boîtier de raccordement (12) au moyen de zones de raccordement (18) flexibles.

2. Module de fixation selon la revendication 1, les zones de raccordement (18) étant exécutées de manière à pouvoir être courbées et/ou tordues dans des directions situées en biseau l'une par rapport à l'autre, notamment dans deux directions disposées perpendiculairement l'une par rapport à l'autre.

3. Module de fixation selon l'une quelconque des revendications précédentes, une bride de raccordement (16) présentant un segment d'étanchéité périphérique (20), le segment d'étanchéité (20) étant notamment exécuté en tant que joint à lèvre axial.

4. Module de fixation selon la revendication 3, plusieurs brides de raccordement (16) présentant un joint d'étanchéité périphérique commun (30), au moins deux segments d'étanchéité (20) fermés étant regroupés dans un joint d'étanchéité (30), et étant notamment reliés au moyen d'une pièce de raccordement.

5. Module de fixation selon l'une quelconque des revendications précédentes, les zones de raccordement (18) étant exécutées en tant que charnières.

6. Système de filtre (100) avec un module de fixation (10) pour le raccordement à une surface de raccordement (200) bombée, selon l'une quelconque des revendications précédentes, comprenant
- un boîtier de filtre (110),
- au moins un élément filtrant (126, 146) qui est disposé dans le boîtier de filtre (110) et qui sépare un côté brut (106) d'un côté pur (108),
- une zone d'entrée (102) pour le fluide à filtrer et une zone de sortie (104) pour le fluide filtré,
le module de fixation (10) étant relié fluidiquement à la zone d'entrée (102) ou à la zone de sortie (104).

7. Système de filtre selon la revendication 6, le module de fixation (10) étant disposé d'un côté pur (108) du système de filtre (100).

8. Système de filtre selon la revendication 6 ou 7, le module de fixation (10) présentant une étanchéité axiale par rapport à la surface de raccordement (200) et/ou le module de fixation (10) présentant une étanchéité radiale par rapport au boîtier de filtre (110).

9. Système de filtre selon l'une quelconque des revendications 6 à 8, comprenant au moins un module de filtration (122), avec au moins un composant de boîtier (120) du boîtier de filtre (110) avec au moins un élément filtrant (126) dans le composant de boîtier (120), le module de filtration (122) étant prévu au niveau de sa section de manière essentiellement à admission libre et une répartition, sous forme de tube d'aspiration, d'un débit volumique traversant l'élément filtrant (126), étant rendue possible par au moins deux canaux de sortie (170) situés dans le composant de boîtier (120) qui sont reliés fluidiquement à des canaux (14) évoluant dans des sections de canal individuelles (40) du module de fixation (10).

10. Système der filtre selon l'une quelconque des revendications 6 à 9, le premier élément filtrant (126) étant placé en aval, dans le sens du flux, d'un autre élément filtrant (146), les deux éléments filtrants (126, 146) étant disposés de préférence respectivement dans des composants de boîtier (120, 140) séparés du boîtier de filtre (110) qui, notamment, sont reliées l'une à l'autre de manière amovible.

11. Module de filtration (122) pour un système de filtre (100) selon l'une quelconque des revendications 6 à 10, comprenant au moins un composant de boîtier (120) avec un élément filtrant (126) dans le composant de boîtier (120), le module de filtration (122) rendant essentiellement possible au niveau de sa section, de manière à admission libre, une répartition, sous forme de tube d'aspiration, d'un débit volumétrique traversant l'élément filtrant (126).

12. Module de filtration selon la revendication 11, le composant de boîtier (120) présentant au moins deux canaux de sortie (170) pour la répartition, sous forme de tube d'aspiration, du débit volumétrique.

13. Module de filtration selon la revendication 11 ou 12, le composant de boîtier (120) étant exécuté sous forme de bac, de sorte à former du côté de l'écoulement de l'élément filtrant y étant disposé (126) un espace collecteur d'air (127) du côté pur.

14. Module de filtration selon la revendication 13, le composant de boîtier (120) présentant du côté de l'écoulement au moins deux canaux de sortie (170) qui sont reliés fluidiquement à l'espace collecteur d'air (127), le composant de boîtier (120) présentant du côté de l'écoulement de préférence au moins trois canaux de sortie (170) qui sont reliés fluidiquement à l'espace collecteur d'air (127).

15. Module de filtration selon l'une quelconque des revendications 11 à 14, les canaux de sortie (170) étant juxtaposés de manière linéaire le long d'un axe (111).

16. Module de filtration selon l'une quelconque des revendications 11 à 15, l'élément filtrant (126) dans le composant de boîtier (120) étant étanché de manière périphérique par rapport à l'espace collecteur d'air du côté pur (126).

17. Module de filtration selon l'une quelconque des revendications 11 à 16, le composant de boîtier (120) présentant une zone de bride d'étanchéité faisant saillie vers l'intérieur avec une surface d'étanchéité (138) permettant le raccordement étanche d'un autre composant de boîtier (140) avec élément filtrant (146).

18. Module de filtration selon l'une quelconque des revendications 11 à 17, au moins deux composants de boîtier (120, 140) étant prévus, un autre composant de boîtier (140) avec un autre élément filtrant (146) étant raccordé au composant de boîtier (120).

19. Module de filtration selon la revendication 18, les composants de boîtier (120, 140) présentant un ou plusieurs guides (132, 134) et/ou éléments de guidage (142) correspondants destinés à la fixation de l'autre composant de boîtier (140).
